# EUROPEAN PATENT SPECIFICATION

(11) **EP 3 990 948 B1**
(45) Date of publication and mention of the grant of the patent: **27.11.2024**
(21) Application number: 19942110.8
(22) Date of filing: 03.12.2019
(51) Int. Cl.: G01T 5/00, G01T 3/02, G01T 3/00

(54) **A NEUTRON DETECTOR WITH SOLID-LIQUID MODERATORS FOR MEASURING NEUTRONS AT DIFFERENT ENERGY RANGES**
NEUTRONENDETEKTOR MIT FEST-FLÜSSIGEN MODERATOREN ZUR MESSUNG VON NEUTRONEN IN VERSCHIEDENEN ENERGIEBEREICHEN
DÉTECTEUR DE NEUTRONS DOTÉ DE MODÉRATEURS SOLIDES ET LIQUIDES DESTINÉ À MESURER DES NEUTRONS DANS DIFFÉRENTES GAMMES D'ÉNERGIE

(30) Priority: 19.08.2019 TR 201912427
(43) Date of publication of application: 04.05.2022
(73) Proprietor: ORTA DOGU TEKNIK UNIVERSITESI, 06800 Çankaya/Ankara (TR)
(72) Inventor: DEMIRKÖZ, Melahat Bilge, Ankara (TR); YAZGAN, Çagrr, Ankara (TR)
(74) Representative: Yalçiner Patent and Consulting Ltd.
(86) International application number: PCT/TR2019/051020
(87) International publication number: WO 2021/034284

(56) References cited:
- CN-A- 108 375 784
- DE-U1- 202016 103 001
- JP-A- 2010 190 644
- US-A- 4 395 633
- US-A1- 2018 224 565
- US-A1- 2018 224 565
- US-B1- 9 081 100

## Description

### Technical Field

The present invention relates to a neutron detector that aims to provide a variable solid and liquid moderator layer and hence to measure the neutron radiation of various energy ranges by being programmed before measurement or being controlled remotely during measurement.

### Prior Art

The primary aim of neutron detectors is reducing energy of neutrons received by the detector with the effect of scatterings. The reason for such a case is the need for slowing down the neutrons to the low energies named thermal energy level to allow them to be captured. Otherwise, a neutron that is not reduced to this level would leave a detector without being captured and hence a user cannot measure these neutrons in the medium. To this end, the materials named moderators are used on the outer layer of the neutron detectors. The neutron in the medium firstly passes through this material and, after losing its energy, reaches the main detector tube.

The interaction amount required for a neutron to be reduced to the thermal energy level, which is a measurable level, varies depending on the amount of it's incoming energy. As a neutron that has high energy performs more scatterings and hence can be reduced to the thermal energy level in comparison to a neutron having lower amount of energy. It is required for the high-energy neutrons to be slowed by means of a thicker moderator layer.

In various applications, such as particle accelerators that are being gradually used more frequently and in nuclear power plants, secondary neutron radiation is produced over a wide energy range. In this context, it is known that measurements carried out by use of detectors having the thickness of single and fixed moderators fail to count most of these neutrons.

In most of the neutron detectors that have now been commercially used, the fixed size moderator or set of moderators with various thicknesses are preferred. In these cases, the neutrons that do not have enough energy to pass through the moderator layer are not capable of reaching the main detector tube in which measurement would be performed. Even though they can pass through the moderator layer, the neutrons that have high energy and are not reduced to a measurable energy level leave the detector tube without being captured.

In the prior art, the FHT 762 Wendi-2 model neutron detector obtained from the company Thermofisher is used. In said detector, a solid material having a wall thickness of 22 cm is used as a moderator. With this design approach and when the aforementioned description is considered, the detector has low sensitivity.

Another neutron detector that has been used in the prior art is the Microspec Neutron Probe of the company Bubble Technology Industries. In this design, two detectors having different moderator thicknesses have been used in order to increase the energy range of measurement. This case improves the measurement sensitivity of the detector to an extent; however, it still does not allow measurement within wide energy range.

Other designs that are commercially used to meet the need for the detectors having various moderator thicknesses are the detectors in which the moderator thickness can be changed by the use of a many detectors encircled with moderators having different thicknesses or that can be changed manually by users.

The other spectrometers used in the prior art are the Bonner Sphere Spectrometer of the company Else Nuclear and the Nested Neutron Spectrometer of the company Detec. When considering the area they cover, their weights and difficulty in handling, it is obvious that it won't be practical to perform a neutron measurement by using these detectors. In the Nested Neutron Spectrometer, it is required for the user to enter an irradiation room and to change the moderator after every measurement. This case causes the duration of measurement to be extended in measurements carried out in wide energy range. Furthermore, since the radiation level in the irradiation room is not suddenly reduced to zero once the process of irradiation is completed, entrance into the irradiation room would not be appropriate in terms of radiation safety.

Another spectrometer used in the prior art is the Rotating Neutron Spectrometer that has been manufactured by the company Bubble Technology Industries. This design has been achieved by disposing of seven individual detectors with different moderator thicknesses on a rotating system. When compared to other designs, while this design is more successful as it can perform measurement in the energy range of thermal to 4.5 MeV energy, such an energy range is even insufficient for most of the applications wherein secondary neutrons are produced. Moreover, the product fails to provide variety in accordance with the need of users. During the rotation process, the resolution of measurements will be lowered depending on the detectors being exposed to different irradiation fields out of the primary irradiation field.

Another invention known from the prior art is the patent document numbered US20180224565. When said patent document is reviewed, it can be seen that it has been aimed to provide a moderator layer at different thicknesses by using a liquid moderator. This embodiment is achieved by filling in pools located in the detector that are shown in globular shape by injection from a liquid reservoir. When the description of the present invention is reviewed, it can be evidently seen that the design does not have the required structure for preventing the gamma radiation in the medium. In most of the embodiments wherein a neutron production occurs, a large number of gamma radiations are also involved. To allow the detector to carry out a neutron measurement efficiently, the gamma radiation must be rejected. According to the patent document, it is understood that the detector container has a spherical geometry. As it wouldn't be possible to move with such a spherical geometry, the chambers in which the liquid moderator is filled are designed from a material such as aluminum or lead and in a fixed position to the detector. In this regard, even if the liquid moderator is drained, as there will be a lot of adhered layers left around the detector tube, it can be understood that the design is not applicable for measuring low-energy neutrons.

CN108375784A discloses a multi-layer spherical slowing body container and a real-time measuring device for neutron energy spectrum. A multi-layer spherical body container is composed of a plurality of concentric hollow spherical shell layers having different inner diameters from the inside to the outside and hollow spherical shell is connected to the external liquid moderator loop through the corresponding pipeline.

DE202016103001U1 discloses a fully automatic Bonner sphere neutron spectrometer with water inlet and water outlet, which comprises a detector system a 3He spherical neutron detector for neutron detection, a water inlet and water outlet system and an evaluation and processing system.

US9081100B1 discloses that a neutron detection system comprises a neutron detector including a plurality of neutron detection devices, a control system configured to generate a detector response library, wherein the detector response library includes one or more sets of data indicative of a response of the detector to a known neutron source, receive one or more measured neutron response signals from each of the neutron devices, the one or more measured response signals response to a detected neutron event, and determine one or more characteristics of neutrons emanating from a measured neutron source by comparing the one or more measured neutron response signals to the detector response library.

The most important trait of our design is that time-dependent changes such as locations of the solid moderators and the step of filling of the liquid chambers can be controlled by the user. In different mediums of neutron radiation, as different parameters are needed, the design requires controllability.

### Brief Description and Aim of the Invention

The aim of the invention is to develop a neutron detector that is capable of measuring at high sensitivities in a wide range of energies, with a novel design logic that is completely different from the neutron monitoring instruments currently used commercially.

It has been conceived to provide that the solid and liquid moderators that are changeable in thickness are used in the same design instead of the single solid moderator that is not applicable to be changed in thickness. Due to its changeable moderator structure, the detector would allow the user to perform a measurement at different thicknesses of moderator in single irradiation by being programmed before or remotely controlled during the measurement.

Therefore, a neutron detector that is capable of performing precise measurements, that eliminates the limitation of measuring at low ranges of energy, and that enables the user to carry out measurements at the energy levels determined by the detector is provided. Another important significant feature of the detector is to allow the use of different solid and liquid moderators in the detector at research and development studies.

In the neutron detector with the solid-liquid moderator, the time dependent changes including the location of the solid moderators, and the step of filling the liquid chambers, can be controlled by the user. In different neutron radiation fields, as different parameters are needed, the design requires controllability.

### Description of Drawings

The drawings and the related description used in an attempt to better disclose the neutron detector with the solid-liquid moderator that has been developed with the present invention are as follows:

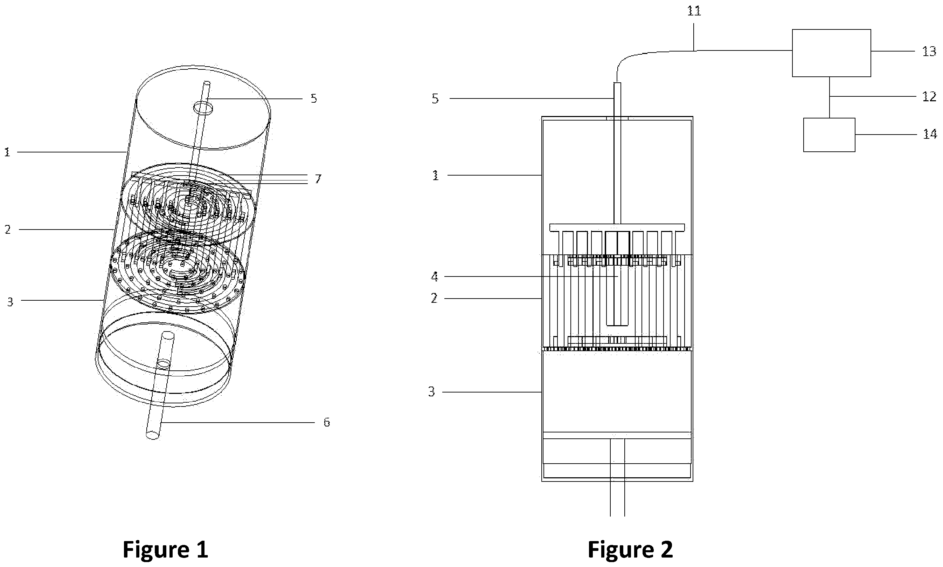

Figure 1: is a perspective view of the neutron detector according to the invention.
Figure 2: is a side view of the neutron detector according to the invention.
Figure 3: is a top view of the neutron detector according to the invention.
Figure 4: is a block diagram of the electronic design of the neutron detector according to the invention.

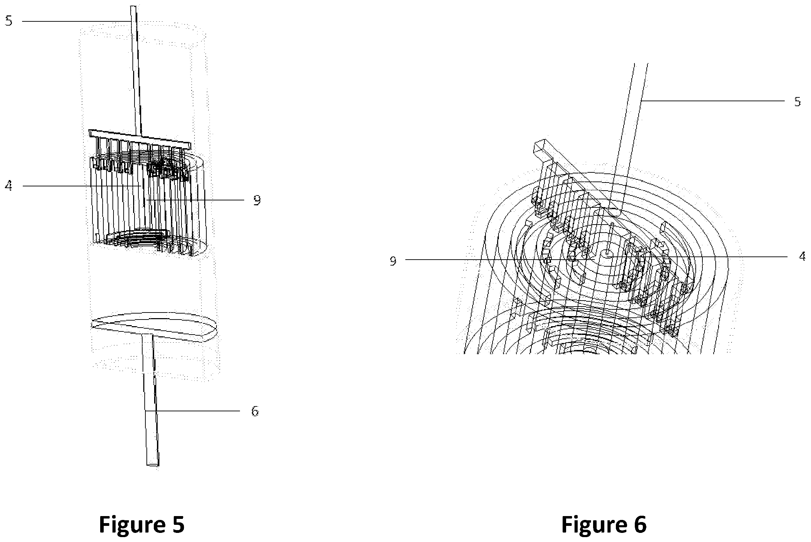

Figure 5: is a sectional view of the neutron detector according to the invention.
Figure 6: is a top perspective view of the neutron detector according to the invention.

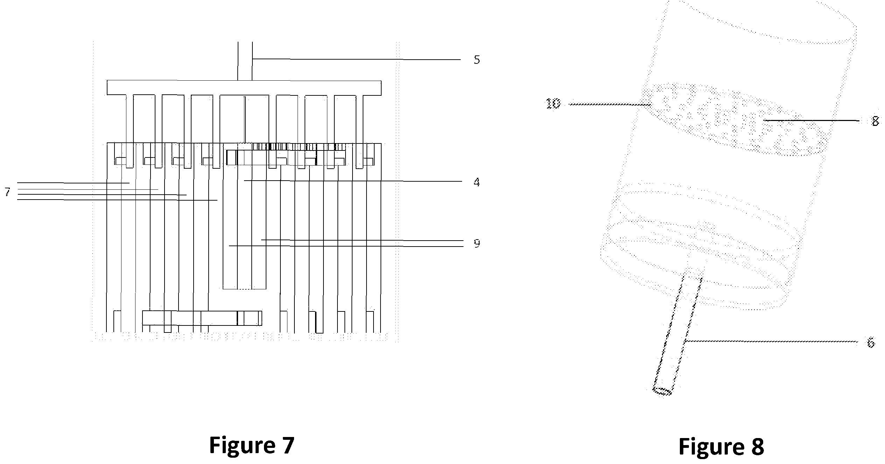

Figure 7: is a side view of the neutron detector according to the invention.
Figure 8: is a side perspective view of the neutron detector according to the invention.

### Definitions of References for Drawings

The elements and parts presented in the figures to better disclose the neutron detector with the solid-liquid moderator that has been developed with the present invention are numbered, each number thereof having the corresponding definitions below:
1. Solid moderator movement chamber
2. Detector measurement chamber
3. Liquid moderator storage chamber
4. Detector
5. Solid moderator motion lever
6. Liquid moderator movement path
7. Solid moderator
8. Liquid moderator transfer openings
9. Tungsten Sheath
10. Slide gaps
11. Cable connecting the detector to signal processing unit
12. Cable connecting the signal processing unit to the external processing unit
13. Signal processing unit
14. External processing unit
15. Actuator unit
16. Sensor unit
17. Liquid reservoir control unit
18. Power circuits control unit
19. Memory unit
20. Warning unit
21. Status data reading unit

### Detailed Description of the Invention

The invention is a neutron detector that is capable of measuring neutrons at different energy ranges, according to claim 1.

The solid moderators (7) are formed of polyethylene or a high-density polyethylene material, which are interconnected cylinders having a wall thickness of 1 cm and are connected to the solid moderator motion lever (5). The solid moderators (7) move in the solid moderator slide gaps (10) as a result of a movement of the solid moderator motion lever (5) in the vertical axis. After the solid moderator (7) is placed in the detector measurement chamber (2), the solid moderator motion lever (5) releases the solid moderator (7) defined by the user by rotating at a determined angle in the horizontal axis. After the process is completed, the solid moderator motion lever (5) turns back to the solid moderator movement chamber (1).

The detector (4) with BF₃ or He₃ gas is fixed to the center of the detector measurement chamber (2). The data cable (11) connected to the detector (4) is connected to the signal processing unit (13) by extending out of the gap in the solid moderator motion lever (5). The detector (4) is covered with the hollow cylindrical sheath (9) made of tungsten material having 1 cm wall thickness to protect the detector (4) from gamma radiation in the medium. In the cases where a measurement is not carried out, the portion remaining out of the detector measurement chamber (2) outside the detector (4) and the tungsten sheath (9) is called the gap.

The liquid moderator storage chamber (3) is the volume in which the liquid to be used as a moderator is stored. The liquid movement path (6) is fixed to the liquid storage chamber and the liquid is charged and discharged through this path. When needed, the liquid movement path (6) is moved in the vertical axis and thus the liquid can be provided to fill in the related gaps in the detector measurement chamber (2). The liquid moderator transfer openings (8) are provided at the ceiling of the liquid moderator storage chamber (3). The liquid moderator transfer openings (8) have the function of allowing the liquid contained in the liquid moderator storage chamber (3) to pass into the detector measurement chamber (2). All of these openings are controlled by the user via the electronic control unit and the passage of the liquid moderator is allowed from the holes that are desired to be filled with the liquid moderator according to the area between the solid moderators (7) that are desired to be filled.

Different configurations of detectors can be obtained in research and development studies as the liquids to be used as moderator in the detector can be charged and discharged utilizing the liquid movement path (6) and the solid moderators (7) can be mounted and dismounted from the solid moderator motion lever (5). Therefore, the opportunity to develop the detector is given to the user.

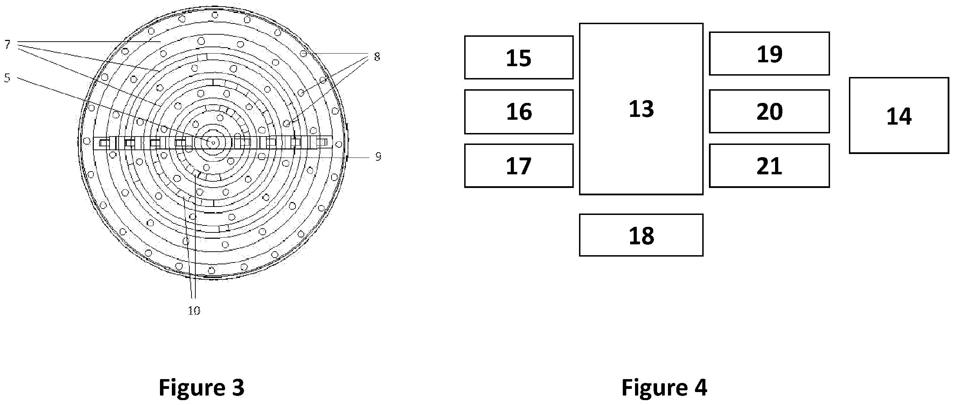

The neutron detector consists of several component and many different electronic units that have been standardized on nuclear instrumentation. These are; a signal processing unit (13), an external processing unit (14), an actuator unit (15), a sensor unit (16), a liquid reservoir control unit (17), a power circuit control unit (18), a memory unit (19), a warning unit (20) and a status data reading unit (21). Figure 4 shows a block diagram of the electronic control unit of the neutron detector. The electronic control unit consists of the components disclosed in detail below.

### Signal Processing Unit (13)

The signal processing unit (13) of the neutron detector functions as the brain of the system. The signal processing unit (13) performs all of the actions that must be conducted by the system and also provides communication between other units in the electronic control unit.

### Actuator unit (15)

Controlling of movements of the moderator layers in the neutron detector is carried out by means of a DC motor.

### Sensor Unit (16)

As the neutron detector operates in a radiation field, the status data such as temperature, humidity, pressure are required to be obtained. The reading of these data is carried out in the sensor unit.

### Liquid Reservoir Control Unit (17)

The liquid moderator storage chamber (3) is provided at the lower portion of the neutron detector. Said chamber must be controlled to protect the detector from any damage likely to occur as a result of leaking of liquids. The liquid contained in the liquid moderator storage chamber (3) is constantly controlled through the liquid reservoir control unit (17).

### Power Circuit Control Unit (18)

The power circuit control unit allows providing energy to the electronic components and controls the amount of the current that the electronic units draw.

### Memory Unit (19)

The memory unit (19) of the neutron detector saves the data received and processed. Thus, the data is enabled to be backed up.

### Warning unit (20)

The warning unit (20) enables an alarm of the detector to be activated once the received neutron data or dose rate of the medium reaches higher values than a determined level.

### Status Data Reading Unit (21)

Receiving and interpreting the data obtained from the sensor unit is carried out in the status data reading unit. Said unit controls if the detector operates smoothly by evaluating the status data.

### External Processing Unit (14)

Once the entire system is collectively operated, the user can control the entire data from a single unit using the external processing unit (14).

The neutron detector subject to the present invention enables the moderator thickness to be changed by the user by being programmed before irradiation or being controlled remotely during irradiation, which helps the present neutron detector be distinguished from the neutron detectors already known from the prior art. Variable thicknesses of the moderator can be obtained by filling the constant-volume ducts to be disposed of in the moderator chamber with the liquid moderator. Therefore, it would be possible to measure the neutrons at wide ranges of energy, which is different from the neutron detectors known from the prior art.

The use of a neutron detector having all of the aforementioned characteristics in critical fields of study wherein the energy range of neutrons should be known in detail would help an important need in the industry, to be met. Moreover, the present neutron detector does not need large area and is very portable.

In an embodiment of the invention, the neutron detector has a length of 88 cm and a cylindrical structure having 21 cm in diameter.

## Claims

1. A neutron detector allowing measurement of neutrons at different energy ranges, comprising
• a detector (4) configured to measure neutrons,
• a detector measuring chamber (2) in which the detector (4) is located,
• a liquid moderator storage chamber (3) in which liquid moderator is stored,
• liquid moderator transfer openings (8) that are located on the ceiling of the liquid moderator storage chamber (3) and configured to allow the liquid contained in the liquid moderator storage chamber (3) to pass into the detector measurement chamber (2)
• and an electronic control unit,
**characterized by** comprising
• a solid moderator movement chamber (1) comprising solid moderators (7) wherein the solid moderators (7) can move in the vertical axis,
• a solid moderator motion lever (5) configured to enable the solid moderators (7) to move in the vertical axis in the solid moderator movement chamber (1),
• a liquid moderator movement path (6) that is connected to the liquid moderator storage chamber (3), and is movable in vertical axis and configured to enable the liquid moderator to pass through the transfer openings (8) to the detector measuring chamber (2),
• a sheath (9) configured to Prevent gamma radiation by surrounding the detector (4),
• slide gaps (10) configured to allow the solid moderators (7) to move in as a result of a movement of the solid moderator motion lever (5) in the vertical axis.

2. Neutron detector according to claim 1, **characterized in that** the electronic control unit comprises
• a signal processing unit (13) configured to carry out all of the actions that a system requires to perform, and configured to enable communication between other units,
• an actuator unit (1) configured to control movements of moderator layers in the neutron detector,
• a sensor unit (16) configured to allow the status data such as temperature, humidity, and pressure to be read,
• a liquid reservoir control unit (17) configured to constantly control the liquid contained in the liquid moderator storage chamber (3),
• a power circuits control unit (18) configured to allow to provide energy to electronic components and configured to control the amount of current that electronic units draw,
• a memory unit (19) configured to back up the data received and processed,
• a warning unit (20) configured to enable an alarm of the detector to be activated once the received neutron data or dose rate of a medium reaches higher values than a determined level,
• a status data reading unit (21) configured to receive the data from the sensor unit (16) and carry out interpreting of data,
• an external processing unit (14) configured to allow a user to control entire data from a single unit.

3. A neutron detector according to any of the preceding claims, **characterized in that** thicknesses of the solid and liquid moderators can be changed by being remotely controlled by a user.

4. A neutron detector according to claim 2, **characterized in that** it has a cable (11) configured to connect the detector (4) to the signal processing unit (13) to enable a connection between the detector (4) and the signal processing unit (13).

5. A neutron detector according to claim 2, **characterized in that** it has a cable (12) configured to enable the connection between the signal processing unit (13) and the external processing unit (14).

6. A neutron detector according to claim 1, **characterized in that** it has a length of 88 cm and a cylindrical structure having a diameter of 21 cm.

7. A neutron detector according to claim 1, **characterized in that** the detector (4) is a BF₃ detector.

8. A neutron detector according to claim 1, **characterized in that** the detector (4) is a He₃ detector.

9. A neutron detector according to claim 1, **characterized in that** the sheath (9) is a tungsten sheath.

10. A neutron detector according to claim 9, **characterized in that** the tungsten sheath (9) has a wall thickness of 1 cm.

11. A neutron detector according to claim 1, **characterized in that** the solid moderators (7) are interconnected cylinders having a wall thickness of 1 cm.

## Patentansprüche

1. Ein Neutronendetektor, der die Messung von Neutronen in verschiedenen Energiebereichen ermöglicht, umfassend
• einen Detektor (4), der zum Messen von Neutronen ausgebildet ist,
• eine Detektormesskammer (2), in der sich der Detektor (4) befindet,
• eine Flüssigmoderator-Lagerkammer (3), in der Flüssigmoderator gespeichert ist,
• Flüssigkeitsmoderator-Transferöffnungen (8), die sich an der Decke der Flüssigkeitsmoderator-Lagerkammer (3) befinden und so ausgebildet ist, dass sie es der in der Flüssigkeitsmoderator-Lagerkammer (3) enthaltenen Flüssigkeit ermöglichen, in die Detektormesskammer (2) zu gelangen.
• und einer elektronischen Steuereinheit,
**dadurch gekennzeichnet, dass** es umfasst
• eine Feststoffmoderator-Bewegungskammer (1), die Feststoffmoderatoren (7) umfasst, wobei sich die Feststoffmoderatoren (7) in der vertikalen Achse bewegen können,
• einen Feststoffmoderator-Bewegungshebel (5), der so ausgebildet ist, dass er eine Bewegung der Feststoffmoderatoren (7) in der vertikalen Achse in der Feststoffmoderator-Bewegungskammer (1) ermöglicht,
• einen Flüssigkeitsmoderator-Bewegungspfad (6), der mit der Flüssigkeitsmoderator-Lagerkammer (3) verbunden ist und in vertikaler Achse beweglich und ausgebildet ist, um es dem Flüssigkeitsmoderator zu ermöglichen, durch die Transferöffnungen (8) zur Detektormesskammer (2) zu gelangen,
• eine Hülle (9), die den Detektor (4) umgibt und so ausgebildet ist, dass sie Gammastrahlung verhindert,
• Gleitspalte (10), die so ausgebildet sind, dass sie ein Einströmen der Feststoffmoderatoren (7) infolge einer Bewegung des Feststoffmoderator-Bewegungshebels (5) in der vertikalen Achse ermöglichen.

2. Neutronendetektor nach Anspruch 1, **dadurch gekennzeichnet, dass** die elektronische Steuereinheit umfasst
• eine Signalverarbeitungseinheit (13), die so ausgebildet ist, dass sie alle Aktionen ausführt, die ein System ausführen muss, und so ausgebildet ist, die Kommunikation zwischen anderen Einheiten zu ermöglichen,
• eine Aktuatoreinheit (1) zur Steuerung der Bewegung von Moderatorschichten in der Neutronendetektor,
• eine Sensoreinheit (16), die so ausgebildet ist, dass sie das Auslesen von Zustandsdaten wie Temperatur, Luftfeuchtigkeit und Druck ermöglicht,
• eine Flüssigkeitsreservoir-Steuereinheit (17), die so ausgebildet ist, die in der Flüssigkeitsmoderator-Lagerkammer (3) enthaltene Flüssigkeit ständig zu steuern,
• eine Stromkreis-Steuereinheit (18), die so ausgebildet ist, die Energieversorgung elektronischer Komponenten zu ermöglichen und die Strommenge zu steuern, die elektronische Einheiten aufnehmen,
• eine Speichereinheit (19), die zum Sichern der empfangenen und verarbeiteten Daten ausgebildet ist,
• eine Warneinheit (20), die so ausgebildet ist, dass sie einen Alarm des Detektors aktiviert, sobald die empfangenen Neutronendaten oder die Dosisleistung eines Mediums höhere Werte als einen bestimmten Ebene erreichen,
• eine Statusdaten-Leseeinheit (21), die so ausgebildet ist, die Daten von der Sensoreinheit (16) zu empfangen und führen die Interpretation der Daten durch,
• eine externe Verarbeitungseinheit (14), die so ausgebildet ist, dass ein Benutzer sämtliche Daten von einer einzigen Einheit aus steuern kann.

3. Neutronendetektor nach einem der vorhergehenden Ansprüche, **dadurch gekennzeichnet, dass** die Dicken der festen und flüssigen Moderatoren durch Fernsteuerung durch einen Benutzer geändert werden können.

4. Neutronendetektor nach Anspruch 2, **dadurch gekennzeichnet, dass** er über ein Kabel (11) verfügt, das den Detektor (4) mit der Signalverarbeitungseinheit (13) verbindet und so eine Verbindung zwischen dem Detektor (4) und der Signalverarbeitungseinheit (13) ermöglicht.

5. Ein Neutronendetektor nach Anspruch 2, **dadurch gekennzeichnet, dass** er über ein Kabel (12) verfügt, das so ausgebildet ist, dass es die Verbindung zwischen der Signalverarbeitungseinheit (13) und der externen Verarbeitungseinheit (14) ermöglicht.

6. Ein Neutronendetektor nach Anspruch 1, **dadurch gekennzeichnet, dass** er eine Länge von 88 cm und eine zylindrische Struktur mit einem Durchmesser von 21 cm aufweist.

7. Neutronendetektor nach Anspruch 1, **dadurch gekennzeichnet, dass** der Detektor (4) ein BF₃ -Detektor ist.

8. Neutronendetektor nach Anspruch 1, **dadurch gekennzeichnet, dass** der Detektor (4) ein He₃ -Detektor ist.

9. Neutronendetektor nach Anspruch 1, **dadurch gekennzeichnet, dass** die Hülle (9) eine Wolframhülle ist.

10. Neutronendetektor nach Anspruch 9, **dadurch gekennzeichnet, dass** die Wolframhülle (9) eine Wandstärke von 1 cm aufweist.

11. Neutronendetektor nach Anspruch 1, **dadurch gekennzeichnet, dass** die Feststoffmoderatoren (7) miteinander verbundene Zylinder mit einer Wandstärke von 1 cm sind.

## Revendications

1. Détecteur de neutrons permettant de mesurer les neutrons à différentes gammes d'énergie, comprenant
• un détecteur (4) configuré pour mesurer les neutrons,
• une chambre de mesure du détecteur (2) dans laquelle le détecteur (4) est situé,
• une chambre de stockage du modérateur liquide (3) dans laquelle le modérateur liquide est stocké,
• des ouvertures de transfert du modérateur liquide (8) qui sont situées sur le plafond de la chambre de stockage du modérateur liquide (3) et configurées pour permettre au liquide contenu dans la chambre de stockage du modérateur liquide (3) de passer dans la chambre de mesure du détecteur (2)
• et une unité de contrôle électronique,
**caractérisé en ce qu'**il comprend
• une chambre de mouvement du modérateur solide (1) comprenant des modérateurs solides (7) dans laquelle les modérateurs solides (7) peuvent se déplacer dans l'axe vertical,
• un levier de motion du modérateur solide (5) configuré pour permettre aux modérateurs solides (7) de se déplacer dans l'axe vertical dans la chambre de mouvement du modérateur solide (1),
• une voie de déplacement du modérateur liquide (6) qui est connectée à la chambre de stockage du modérateur liquide (3), mobile dans l'axe vertical et configurée pour permettre au modérateur liquide de passer à travers les ouvertures de transfert (8) vers la chambre de mesure du détecteur (2),
• une gaine (9) configurée pour empêcher le rayonnement gamma en entourant le détecteur (4),
• des espaces de glissement (10) configurés pour permettre aux modérateurs solides (7) de se déplacer à l'intérieur en raison d'un mouvement du levier de motion du modérateur solide (5) dans l'axe vertical.

2. Détecteur de neutrons selon la revendication 1, **caractérisé en ce que** l'unité de commande électronique comprend
• une unité de traitement des signaux (13) configurée pour effectuer toutes les actions qu'un système doit réaliser, et configurée pour permettre la communication entre d'autres unités,
• une unité d'actionnement (1) configurée pour contrôler les mouvements des couches du modérateur dans le détecteur de neutrons,
• une unité de capteur (16) configurée pour permettre aux données d'état telles que la température, l'humidité et la pression d'être lues,
• une unité de contrôle du réservoir de liquide (17) configurée pour contrôler constamment le liquide contenu dans la chambre de stockage du modérateur liquide (3),
• une unité de contrôle des circuits d'alimentation (18) configurée pour permettre de fournir de l'énergie aux composants électroniques et configurée pour contrôler la quantité de courant que les unités électroniques tirent,
• une unité de mémoire (19) configurée pour sauvegarder les données reçues et traitées,
• une unité d'avertissement (20) configurée pour permettre à une alarme du détecteur d'être activée une fois que les données de neutrons reçues ou le débit de dose d'un milieu atteignent des valeurs supérieures à un niveau déterminé,
• une unité de lecture des données d'état (21) configurée pour recevoir les données de l'unité de capteur (16) et effectuer l'interprétation des données,
• une unité de traitement externe (14) configurée pour permettre à un utilisateur de contrôler l'ensemble des données à partir d'une seule unité.

3. Détecteur de neutrons selon l'une des revendications précédentes, **caractérisé en ce que** les épaisseurs des modérateurs solides et liquides peuvent être changées en étant contrôlées à distance par un utilisateur.

4. Détecteur de neutrons selon la revendication 2, **caractérisé en ce qu'**il comporte un câble (11) configuré pour connecter le détecteur (4) à l'unité de traitement des signaux (13) pour permettre une connexion entre le détecteur (4) et l'unité de traitement des signaux (13).

5. Détecteur de neutrons selon la revendication 2, **caractérisé en ce qu'**il comporte un câble (12) configuré pour permettre la connexion entre l'unité de traitement des signaux (13) et l'unité de traitement externe (14).

6. Détecteur de neutrons selon la revendication 1, **caractérisé en ce qu'**il a une longueur de 88 cm et une structure cylindrique ayant un diamètre de 21 cm.

7. Détecteur de neutrons selon la revendication 1, **caractérisé en ce que** le détecteur (4) est un détecteur BF₃.

8. Détecteur de neutrons selon la revendication 1, **caractérisé en ce que** le détecteur (4) est un détecteur Hes.

9. Détecteur de neutrons selon la revendication 1, **caractérisé en ce que** la gaine (9) est une gaine en tungstène.

10. Détecteur de neutrons selon la revendication 9, **caractérisé en ce que** la gaine de tungstène (9) a une épaisseur de paroi de 1 cm.

11. Détecteur de neutrons selon la revendication 1, **caractérisé en ce que** les modérateurs solides (7) sont des cylindres interconnectés ayant une épaisseur de paroi de 1 cm.
